# EUROPEAN PATENT APPLICATION

(11) **EP 0 829 201 A1**
(43) Date of publication of application: **18.03.1998**
(21) Application number: 97202450.9
(22) Date of filing: 07.08.1997
(51) Int. Cl.: A01K 97/00, A41D 13/00

(54) **Wiper**

(30) Priority: 06.08.1996 GB 9616526
(71) Applicant: Luggar, Ricky, Romford, Essex RM2 6RS (GB); Tattingham, William, Romford, Essex RM2 6RS (GB)
(72) Inventor: Luggar, Ricky, Romford, Essex RM2 6RS (GB); Tattingham, William, Romford, Essex RM2 6RS (GB)
(74) Representative: BATCHELLOR, KIRK & CO.

(57) **Abstract**

A wiper is disclosed comprising a mat 2 having bristles 6 extending from one side and straps 14,16 for fixing it, e.g. to the user or to an object.

The bristles are very effective for removing the soiling experienced by anglers. Affixing the mat to a limb, e.g. to the user's thigh, allows the angler to wipe one hand without the use of the other. Thus a rod or pole or a net can be held in one hand while the other is wiped.

## Description

This invention relates to wipers.

Wipers are used widely in industry, domestically, and so on, for cleaning a user's hands. They are often rag, preferably cotton or may be paper. In some instances wipers are washable, in others they are disposed of once soiled.

The background to the invention will be described with reference to a particular application. The invention is not limited to this application, however. Other applications will be described and still others will occur to the reader.

A particular problem is experienced by anglers. Ground bait is often bread-based and is very sticky and difficult to remove. Fish slime and scales are messy and also difficult to remove. Anglers commonly us a small piece of towelling, which has the virtue that it can be washed, but is not very effective for its intended purpose. The towelling is generally accepted, however, and no one has thought of looking for a better solution.

Broadly, against this background there is provided a wiper, comprising a mat having bristles extending from one side and means for fixing it, e.g. to the user or to an object. For fishing gardening etc, the mat preferably has suitable dimensions that, and includes means by which, it may be affixed to the body or a limb of the user or to a fishing tackle box or work surface.

The bristles are very effective for removing the soiling experienced by anglers. Affixing the mat to a limb, e.g. to the user's thigh, allows the angler to wipe one hand without the use of the other. Thus a rod or pole or a net can be held in one hand while the other is wiped.

The wiper is preferably moulded in one piece, including the bristles, from a synthetic plastics, or synthetic or natural rubber compound.

In one form the wiper includes loops to receive straps or tapes for affixing it to the body or a limb of the user.

The wiper may include straps hook and loop fastening or tapes by which it may be affixed to the body or limb of the user. The straps may be located in the loops, or may be otherwise affixed to the mat. One example of hook and loop fastening is sold under the trademark "Velcro".

In an alternative arrangement, the wiper is fixed, e.g. by stitching, to a a garment, so that it will be affixed to the body or limb of the user when the garment is worn.

The invention also extends to a wiper, comprising a mat having bristles extending from one side, when attached to a fishing tackle box or to a work surface.

In a preferred form the wiper is in combination with one or more containers affixed so as to be operable when the wiper is in use. The container(s) may be used to hold bait, for example.

Additionally, or alternatively, the wiper may be combined with a towel removably affixed thereto.

The wiper may further include a loop or socket positioned operatively to receive a catapult handle when the wiper is in use.

Preferably, the mat is moulded in one piece, including the bristles, from a synthetic or synthetic or natural rubber compound.

Embodiments of the invention will now be described, by way of example, with reference to the accompanying drawings, in which:

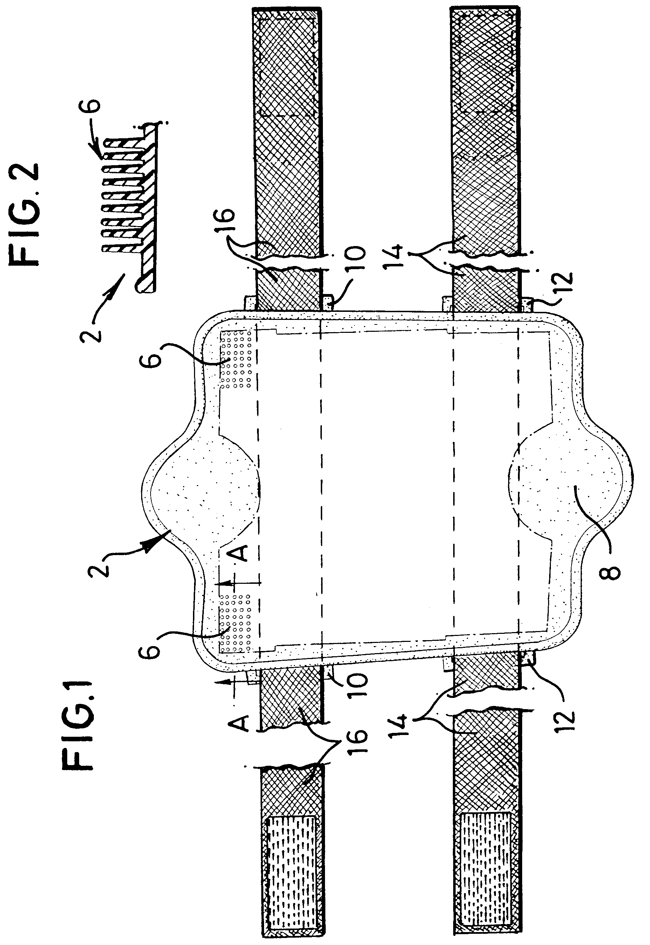

Figure 1 is a plan view of a wiper embodying the invention;
Figure 2 is a scrap cross section on arrows A-A through part of the wiper of Figure 1;
Figure 3 is a pictorial view of the wiper of Figure 1 in use affixed to the user's thigh and in combination with a single bait container;
Figure 4 is a view similar to that of Figure 3 with two bait containers;
Figure 5 is a pictorial view of the wiper of Figure 1 in use affixed to the user's thigh and in combination with a towel;
Figure 6 is a pictorial view of the wiper of Figure 1 in use affixed to the user's thigh and in combination with a catapult holder;
Figure 7 shows a mitten with the wiper affixed thereto;
Figure 8 is a scrap cross section on arrows X-X through part of the wiper of Figure 7; and
Figure 9 is a pictorial view of a kitchen work surface with a wiper affixed thereto.

Referring to the drawings, the wiper is in the form of a flexible polyurethane mat 2 having a backing 4 from one side of which bristles 6 project. There is a border 8 round the periphery where no bristles are provided. The bristles and the backing are moulded together in one piece in an injection moulding process. Other flexible plastics materials, natural or synthetic rubber, or natural fibres could alternatively be used.

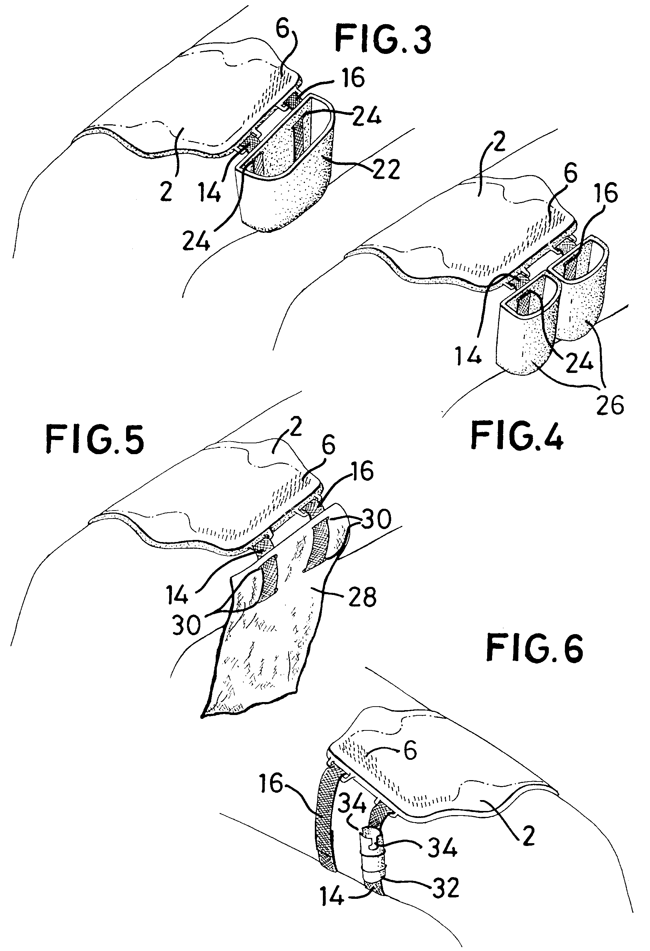

The mat is provided with four loops in pairs 10 and 12. A strap 14, 16 is passed through the loops of each pair. The straps are used to affix the wiper to a user's limb, usually the thigh of a leg as illustrated in Figure 3, but in other examples an arm may be used or the wiper may be strapped round the user's waist. An alternative to the straps is to use tapes, not shown, by which the wiper is tied to the user's limb. Longer tapes or straps would allow the mat to be fastened round the user's waist.

In use the mess from handling ground bait and, hopefully, fish can be conveniently wiped off on the wiper without the need to have both hands free for the purpose.

The mat is also useful to gardeners.

The mat tapers from one end to the other. The narrower end is usually placed nearer the user's knee.

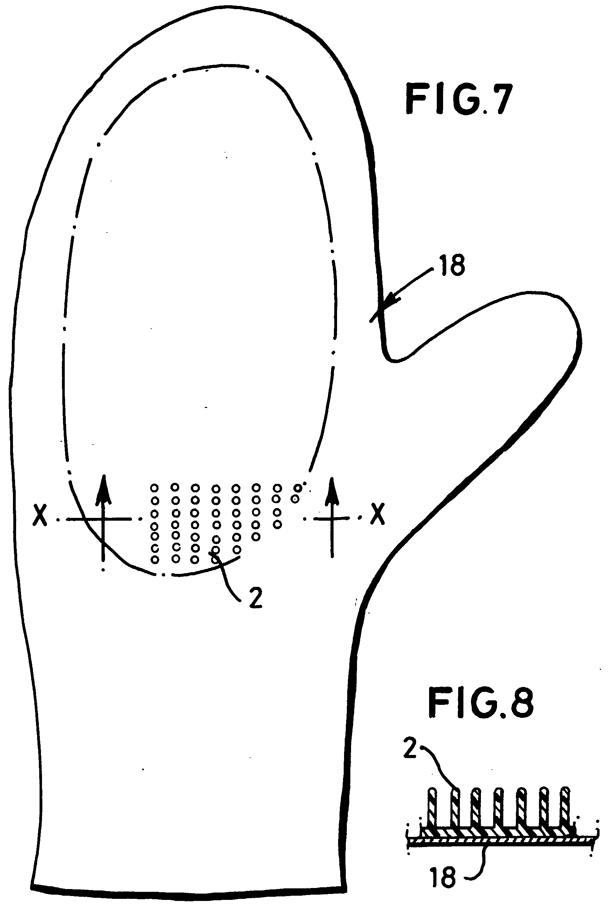

In alternative arrangements the mat may be attached to the user's clothing, e.g. by stitching. A particular example of that is shown in Figures 7 and 8. Here an oval mat 2 is attached to a the palm of a mitten 18. That is found to be particularly useful when mixing ground bait for fishing. It may be desired to space the bristles rather more in the direction across the palm than the spacing in the direction parallel to the fingers. As shown the spacing across the palm is twice that parallel to the fingers.

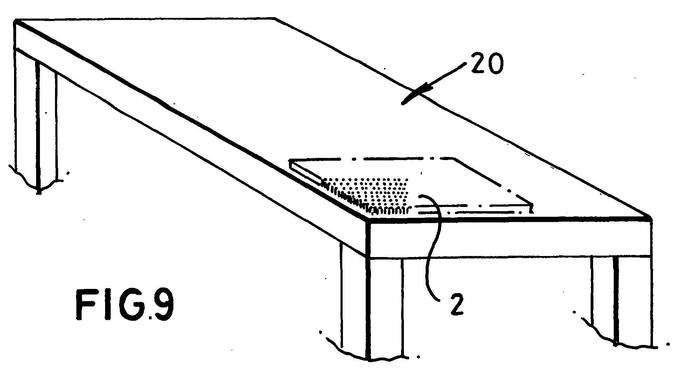

In yet another alternative, the wiper may be provided with velcro pads. This would enable it to be fastened to the user's fishing tackle box (not shown), or to a work surface 20 as shown in Figure 9. In that alternative the wiper may be larger, for example, than would be convenient to fasten to a limb.

In Figure 3 a bait container 22 is affixed to the straps 14, 16 which pass through holes 24 (only two holes are shown).

Figure 4 shows a container 26 attached to each strap.

In Figure 5, a small towel 28 is attached to the straps 14, 16 which pass through holes 30 in the towel.

In Figure 6 a catapult holder 32 is attached to the strap 14. The holder shown is in the form of a tubular socket to receive the handle of the catapult. At the top of the socket notches 34 are formed to receive the arms of the catapult. In another alternative the strap or the mat is formed with a loop (not shown) to receive the handle.

## Claims

1. A wiper, comprising a mat having bristles extending from one side and means for fixing it, e.g. to the user or to an object.

2. A wiper as claimed in claim 1, having suitable dimensions that, and including means by which, it may be affixed to the body or a limb of the user or to a fishing tackle box or work surface.

3. A wiper, as claimed in claim 1 or claim 2, wherein the mat is moulded in one piece, including the bristles, from a synthetic plastics, or synthetic or natural rubber compound.

4. A wiper, as claimed in claim 1, 2 or 3, including loops to receive straps or tapes for affixing it to the body or a limb of the user.

5. A wiper, as claimed in any preceding claim, including straps, hook and loop fastening or tapes by which it may be affixed to the body or limb of the user.

6. A wiper, as claimed in any of claims 1 to 4, fixed to a a garment, so that it will be affixed to the body or limb of the user when the garment is worn.

7. A wiper as claimed in claim 6, wherein the mat is fixed to the palm of a glove or mitten.

8. A wiper, comprising a mat having bristles extending from one side, when attached to a fishing tackle box or to a work surface.

9. A wiper, as claimed in claim 8, wherein the mat is moulded in one piece, including the bristles, from a synthetic or synthetic or natural rubber compound.

10. A wiper as claimed in any preceding claim, in combination with one or more containers affixed so as to be operable when the wiper is in use.

11. A wiper as claimed in any preceding claim, in combination with a towel removably affixed thereto.

12. A wiper as claimed in any preceding claim, including a loop or socket positioned operatively to receive a catapult handle when the wiper is in use.
